# EUROPEAN PATENT SPECIFICATION

(11) **EP 1 372 951 B1**
(45) Date of publication and mention of the grant of the patent: **06.07.2011**
(21) Application number: 02748336.1
(22) Date of filing: 04.03.2002
(51) Int. Cl.: B32B 5/26, B32B 27/36, D04H 13/00, D06N 5/00, B32B 17/12

(54) **COMPOSITE SUPPORT WITH FIRE RESISTANCE PROPERTY FOR BITUMINOUS ROOFING SHEATHS**
VERBUNDSTÜTZE MIT FLAMMHEMMENDER EIGENSCHAFT FÜR BITUMINÖSE DACHABDECKUNGEN
SUPPORT COMPOSITE RESISTANT AU FEU POUR REVETEMENTS DE TOITURE BITUMINEUX

(30) Priority: 08.03.2001 IT MI20010489
(43) Date of publication of application: 02.01.2004
(73) Proprietor: POLITEX s.a.s. di FREUDENBERG POLITEX s.r.l., 20121 Milan (IT)
(72) Inventor: LOCATELLI, Achille, I-22020 Blevio (IT)
(74) Representative: Mittler, Enrico
(86) International application number: PCT/EP2002/002476
(87) International publication number: WO 2002/070246

(56) References cited:
- EP-A- 0 379 100
- EP-A- 0 603 633
- EP-A- 0 905 303
- WO-A-97/18364
- FR-A- 2 701 502
- US-A- 5 118 550

## Description

The present invention refers to a composite support with fire resistance property for bituminous roofing sheaths.

The use of non-woven sheaths in chemical textile material, for instance polyester, is known in order to provide a support for bituminous roofing sheaths.

It is also well known to provide such supports by means of two non-woven layers comprising reinforcing filaments, in particular glass filaments as described in US 5,118,550.

EP 667427 teaches an association of two non-woven layers with interposition of a glass fleece, which has the task to create a barrier to the fire and to the leaking of bitumen in case a fire develops over the roof.

However it was found that both during the stage of production of the composite support and in the stage of impregnation with bitumen, the different degree of dimensional variation of the non-woven layers and the glass fleece causes the formation of fissures or cracks in the same fleece, that nullify the fire resistance property of the support.

EP-A-0905303 discloses a bituminous roofing sheath including a fiber reinforced glass layer interposed between two bitumen layers covered by plastic fleeces.

EP-A-0613633 discloses a composite support for bituminous roofing sheaths comprising a glass net interposed between two non-woven layers. WO-A-97/18364 discloses a synthetic textile support for bituminous roofing sheaths which consists of two non-woven layers and a plurality of longitudinal reinforcing polyester threads interposed between said layers.

FR-A-2701502 discloses a composite roofing material comprising a bitumen-coated cellulose support and a bituminous membrane reinforced with a glass web.

EP-A-0379100 discloses a carrier web composed with a glass fiber mat and a synthetic fiber mat which are needled together and consolidated with a polymer-free melamine-formaldehyde precondensate.

In view of the state of the art described, scope of the present invention is to provide a composite support with fire resistance property for bituminous roofing sheaths, that is capable to obviate to the disadvantages of the known technique.

According to the present invention, such scope is attained by means of a composite support for bituminous sheaths comprising a first and a second layer of non-woven synthetic material, a glass fleece interposed between said layers, and a plurality of longitudinally oriented reinforcing glass filaments interposed between said glass fleece and one of said layers of non-woven material.

Owing to the present invention it is possible to provide a composite support for bituminous sheaths that is capable to offer a greater resistance to fire, as compared with the known products.

In fact the glass filaments guarantee, both in the stage of production of the support and in the stage of impregnation with bitumen, the non-lengthening of the non-woven layers with respect to the glass fleece, with consequent greater resistance to the formation of fissures or cracks of the latter and equally consequent improvement of its fire resistance property.

The characteristics and the advantages of the present invention will become evident from the following detailed description an embodiment thereof, that is illustrated as non limiting example in the enclosed drawings, in which:
Figure 1 shows schematically an embodiment of the production process of the composite support according to the present invention;
Figure 2 shows the composite support according to the present invention in transversal section.

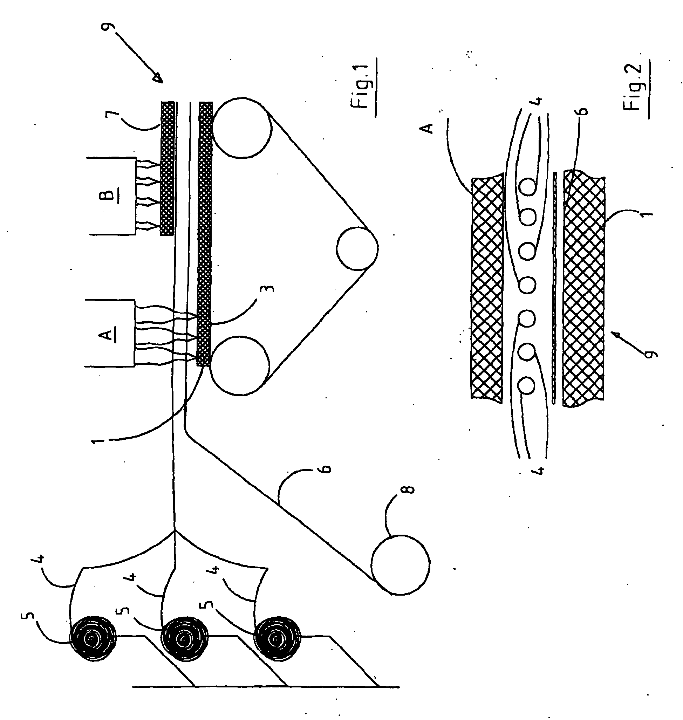

According to what outlined in figure 1 a first layer 1 of non-woven fabric, in particular polyester polymer, is fed by a first extrusion head A onto a conveyor belt 3.

A plurality of longitudinal reinforcing glass filaments 4 and a glass fleece 6 are superimposed onto the non-woven layer 1.

In particular said reinforcing glass filaments 4 are unwound from coils 5 thanks to appropriate traction means (not shown in figure). The glass fleece 6 in turn is unwound from a coil 8.

Onto the group above described a second layer 7 of non-woven fabric, of the same material as before, is placed that is fed by a second extrusion head B.

A composit support 9 is thus obtained, shown in section in Figure 2, in which the glass fleece 6 is located inside the two non-woven layers 1 and 7 that are in turn reinforced in longitudinal sense by the filaments of reinforcing glass 4.

The presence of the reinforcing glass filaments 4 guarantees, both in the stage of production and in the stage of impregnation with bitumen of the composite support, the non-lengthening of the layers 1 and 7, thus preventing the fissuring or cracking in the glass fleece 6.

This guarantees that in case of fire the inflamed bitumen does not leak between the fissure of the glass fleece 6, and therefore that the fire does not propagate inside the building.

Therefore the quality of the product thus obtained allows to provide an effective fire resistant barrier.

In addition it should be noted that the invention can be machined in the stage of the impregnation with bitumen even at high temperatures, since the reinforcing glass filaments 4 prevent the stress of the chemical material that makes up the layers 1 and 7.

## Claims

1. Composite support for bituminous roofing sheaths comprising a first (1) and a second (7) layer of non-woven synthetic material, a glass fleece (6) interposed between said layers (1,7) and plurality of longitudinally oriented reinforcing glass filaments (4) intergrated between said glass fleece (6) and one of said layers (1,7) of non-woven material.

2. Composite support according to claim 1, **characterised in that** said first (1) and second (7) layers are made by extrusion of polymer polyester.

## Patentansprüche

1. Kompositträger fiir bituminöse Dachabdeckungen, umfassend eine erste (1) und eine zweite (7) Lage aus synthetischem Wirrgelege, einem zwischen den Lagen (1, 7) eingebetteten Glasvlies (6) und einer Vielzahl von längs-orientierten, als Verstärkung dienenden Glasfilamenten (4), die zwischen dem genannten Glasvlies (6) und einer der genannten Lagen (1, 7) des Wirrmaterials angeordnet sind.

2. Kompositträger nach Anspruch 1, **dadurch gekennzeichnet, dass** die ersten (1) und zweiten (7) Lagen durch Extrusion von Polymerpolyestem hergestellt sind.

## Revendications

1. Support composite pour gaines de couverture bitumineuses comprenant une première couche (1) et une seconde couche (7) de matériau synthétique non tissé, une laine de verre (6) interposée entre lesdites couches (1, 7) et une pluralité de fils de verre (4) de renfort à orientation longitudinale interposés entre ladite laine de verre (6) et l'une desdites couches (1, 7) de matériau non tissé.

2. Support composite selon la revendication 1, **caractérisé en ce que** lesdites première (1) et seconde (7) couches sont fabriquées par extrusion d'un polyester polymère.
